# EUROPÄISCHE PATENTSCHRIFT

(11) **EP 3 921 885 B1**
(45) Veröffentlichungstag und Bekanntmachung des Hinweises auf die Patenterteilung: **23.11.2022**
(21) Anmeldenummer: 20704221.9
(22) Anmeldetag: 03.02.2020
(51) Int. Cl.: H01M 10/48, B21F 23/00, B21F 45/00, H01B 13/012, H01M 50/50

(54) **HERSTELLEN EINES NIEDERVOLTPFADES EINES ZELLKONTAKTIERSYSTEMS**
CREATING A LOW-VOLTAGE PATH OF A CELL-CONTACTING SYSTEM
PRODUCTION D'UN CHEMIN DE BASSE TENSION D'UN SYSTÈME DE CONTACT DE CELLULES

(30) Priorität: 06.02.2019 DE 102019000856
(43) Veröffentlichungstag der Anmeldung: 15.12.2021
(73) Patentinhaber: Diehl Metal Applications GmbH, 14167 Berlin (DE)
(72) Erfinder: WEYH, Jürgen, 98547 Viernau (DE); WIEBERGER, Martin, 12203 Berlin (DE); WEBER, Ingo, 14469 Potsdam (DE)
(74) Vertreter: Diehl Patentabteilung
(86) Internationale Anmeldenummer: PCT/EP2020/052561
(87) Internationale Veröffentlichungsnummer: WO 2020/161047

(56) Entgegenhaltungen:
- WO-A1-2017/137577
- JP-A- 2001 160 389
- US-A1- 2016 294 141

## Beschreibung

Die Erfindung betrifft ein Verfahren zum Herstellen mindestens eines Niedervoltpfades eines Zellkontaktiersystems.

Ein Zellkontaktiersystem ist z.B. aus "https://www.elringklinger.de/ de/ produktetechnologien/ elektromobilitaet/ batterietechnologie-und-elektromobilitaet" (Abruf am 24.01.2019) bekannt. Das Zellkontaktiersystem besteht aus einem Trägerrahmen zur Aufnahme von Busbars und Elektronikkomponenten. Die Busbars verfügen über ein Kompensationselement zur Reduzierung der Krafteinwirkung auf die Zellterminals. Spannungsabgriffe dienen zur Überwachung der Zellen und ermöglichen aktives/passives Zellbalancing. Die dazugehörige Temperaturüberwachung kann im Zellkontaktiersystem integriert oder außerhalb vorgesehen sein.

In solchen Zellkontaktiersystem sind elektrische Leitungen in Form von "Niedervoltpfaden" integriert. Hierbei handelt es sich nicht um die leistungsführenden Busbars, sondern um Niedervolt-/Niederspannungs-/Niederleistungs-Leitungen zur Verschaltung der Elektronikkomponenten usw.

In aktuellen Produkten von Zellkontaktiersystemen sind als Niedervoltpfade bzw. elektrische Leitungen Kabelbäume, Flexleiter und PCBs gebräuchlich. Montage und Handhabung der entsprechenden Leitungen können dabei aufwendig bzw. schwierig sein. Dies gilt insbesondere für Kabelbäume, da diese biegeschlaffe Bauteile darstellen, welche in der Handhabungstechnik schwierig verarbeitet werden können.

Aus dem Stand der Technik sind verschiedene Verfahren zur Drahtformung/Verdrahtung für unterschiedliche Anwendungszwecke bekannt: In der WO 2017/137577 A1 wird ein Fertigungsverfahren für einen Stent offenbart, bei dem ein Draht helixförmig auf einen Wickelkern aufgewickelt wird. Hierzu wird der Draht über am Wickelkern befindliche Umlenkeinrichtungen schlingenförmig umgelenkt. Die US 2016/29414 A1 beschreibt ein Verfahren, bei welchem über einen Werkzeugkopf Draht Crimpanschlüssen einer in einer über einen Index-Drehtisch ausrichtbaren Aufnahmevorrichtung gehalterten, zu verdrahtenden Komponente zugeführt wird.

Aufgabe der Erfindung ist es, die Herstellung von Niedervoltpfaden in Zellkontaktiersystemen zu verbessern.

Die Aufgabe wird gelöst durch ein Verfahren gemäß Patentanspruch 1 zum Herstellen mindestens eines Niedervoltpfades eines Zellkontaktiersystems, wobei das Zellkontaktiersystem einen Grundkörper enthält. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Bei dem Verfahren wird ein Führungskopf mit einer Ausgabeöffnung bereitgestellt. Der Führungskopf bzw. die Ausgabeöffnung dient zur Ausgabe eines elektrischen Leiters, insbesondere mehrerer elektrischer Leiter. Im Folgenden wird jedoch der Einfachheit halber die Erfindung anhand der Ausgabe eines einzigen Leiters erläutert. Der bereitgestellte Führungskopf wird dann maschinell in einer vorgebbaren Bahn relativ zum Grundkörper geführt bzw. bewegt. Dabei kann tatsächlich der Führungskopf und/oder der Grundkörper bewegt werden, um die Relativbewegung zwischen beiden zu bewirken. Dabei wird der Leiter aus dem Führungskopf ausgegeben und dabei zumindest abschnittsweise, insbesondere vollständig, auf dem Grundkörper verlegt bzw. abgelegt. Durch das Verlegen des Leiters auf dem Grundkörper wird der Niedervoltpfad gebildet. "Verlegen" bedeutet hierbei insbesondere Ablegen, zumindest aber ein Fixieren relativ zum Grundkörper, wobei nicht alle Abschnitte des Leiters den Grundkörper berühren müssen.

Der "Niedervoltpfad" ist hierbei im oben erläuterten Sinne in Abgrenzung zu leistungsführenden Leitern zu verstehen und dient der Diagnose, Steuerung, Temperatur-, Spannungs-, Stromerfassung usw. an einer Batteriezelle bzw. einem - modul, an der bzw. dem das Zellkontaktiersystemen angeschlossen bzw. montiert werden soll bzw. ist. Der "Niedervoltpfad" kann hierbei auch ein Abschnitt bzw. Teilstück eines eigentlichen größeren Niedervoltpfades bzw. Gesamtpfades sein, der stückweise aus erfindungsgemäß hergestellten Niedervoltpfaden zusammengesetzt wird. Der Grundkörper ist insbesondere ein Träger für die Niedervoltpfade, Busbars, Elektronik usw. und ist insbesondere ein- oder mehrstückig ausgeführt. Der Führungskopf ist, um dessen maschinelle Führung bzw. Bewegung zu bewerkstelligen, insbesondere an einer Bewegungsvorrichtung, z.B. einem Roboterarm, einer x,y,z-/Dreh-Führung o.ä., angeordnet.

Gemäß der Erfindung ergibt sich somit ein Verlegen von elektrisch leitenden Verbindungen (Niedervoltpfad, Leiter) für die Signalleitung und -verarbeitung in Zellkontaktiersystemen. Die Erfindung beschreibt ein Verfahren zum Einbringen mindestens eines elektrischen Leiters oder Leitungssystems, in allen drei translatorischen sowie rotatorische Achsen, innerhalb eines Kontaktierungssystems für Batterien und Batteriesysteme. Hierbei wird ein Draht oder eine Leitung (Leiter) durch eine Vorrichtung (Führungskopf, insbesondere zzgl. Roboterarm o.ä.) geführt. Zweck ist die elektrische Verschaltung bzw. Bildung der Signalpfade (durch die Niedervoltpfade) innerhalb eines Zellkontaktiersystems für Batterien.

Gemäß der Erfindung ergibt sich eine flexible und programmtechnisch definierte Verdrahtung und Leitungsverlegung, es ist keine biegeschlaffe Kabel- oder Leiterkartenführung im Handlingsprozess vorhanden, es erfolgt eine werkzeugunabhängige Leitungsbaumgestaltung und Leitungsverlegung, gleiche Anlagen und Automatisierungslösungen erlauben die Herstellung unterschiedlicher Leitungsführungen, Leiterquerschnitte und Leiteranzahlen, eine Kombination von Verlege- (Führungskopf) und Kontaktierköpfen (siehe unten) in einem Fertigungsvorgang ist möglich, eine Kabelmantelisolierung ist im System nicht notwendig, eine Verwendung von Lackdraht bzw. isolierten Leitern ist möglich.

Gemäß der Erfindung ergibt sich eine Alternative zu den gängigen Lösungen für die elektrische Verschaltung von Niedervoltpfaden (zum Beispiel Kabelbaum, Leiterplatte (PCB), Flexleiter, Stanzgitter, usw.). Es ergibt sich eine Vereinfachung der Montage von Niedervoltpfaden, ein hoher Grad an Automatisierbarkeit und Flexibilität (Varianten) wird realisiert.

In einer bevorzugten Ausführungsform wird die Bewegung des Führungskopfes und/oder die Ausgabe des Leiters aus dem Führungskopf automatisch anhand eines programmierbaren Steuerprogramms durchgeführt. Somit ergibt sich eine Automatisierbarkeit und Flexibilität des Verfahrens.

In einer bevorzugten Ausführungsform wird der Leiter während der Ausgabe aus dem Führungskopf in Bezug auf einen bereits fixierten Leiterabschnitt auf Zug gehalten. Der fixierte Leiterabschnitt ist ein solcher, welcher bereits aus dem Führungskopf ausgegeben wurde und insbesondere auf oder an dem Grundkörper verlegt bzw. befestigt wurde, bzw. eine Verlängerung des Leiters im Führungskopf außerhalb dessen darstellt. Der Leiterabschnitt kann auch außerhalb des Grundkörpers relativ zu diesem fixiert werden, z.B. an einem Fixierteil einer Verlegemaschine usw. Die Fixierung erfolgt zum Beispiel durch einen Startknoten oder ein Führungs-/Fixierungselement, wie sie unten beschrieben werden. Insbesondere wird der Zug während der Ausgabe - insbesondere zwischen dem Startknoten und einem Endknoten (siehe unten) - konstant gehalten. Der Zug wird insbesondere über eine Drahtzugbremse erzeugt. Eine gezielte Führung des Leiters ist somit erreichbar, insbesondere ein Durchhängen, Verschlingen usw. des Leiters vermieden.

In einer bevorzugten Ausführungsform wird der Leiter vor dem bzw. beim Beginn des Verlegens auf dem Grundkörper an einem Startknoten relativ zum Grundkörper fixiert und/oder nach dem bzw. am Ende des Verlegens auf dem Grundkörper an einem Endknoten relativ zum Grundkörper fixiert. So kann insbesondere und besonders einfach ab Beginn und nach Beendigung der Verlegung Zug am Leiter aufrechterhalten werden.

In einer bevorzugten Ausführungsform wird der Leiter während des Verlegens auf dem Grundkörper an mindestens einem Führungselement angeordnet. Die Führungselemente dienen insbesondere der Ortsfixierung und/oder Richtungs-Umlenkung des Leiters während des und nach dem Verlegen. Die Führungselemente befinden sich insbesondere entlang des Leiters zwischen Startknoten und Endknoten. Bei bestimmten, z.B. "kurzen", Leitungen ist insbesondere kein Führungselement erforderlich.

In einer bevorzugten Variante dieser Ausführungsformen wird - jeweils falls vorhanden - als Startknoten und/oder Endknoten und/oder Führungselement ein Klemmmittel und/oder ein Haltemittel und/oder ein Stift und/oder eine Barriere und/oder ein Kanal und/oder ein Labyrinth verwendet. Derartige Bauteile eignen sich besonders gut für die entsprechenden Aufgaben.

In einer bevorzugten Variante dieser Ausführungsformen werden - falls vorhanden - als Startknoten und/oder Endknoten und/oder Führungselement solche verwendet, die am Grundkörper angebracht sind. Derartige Bauteile sind insbesondere ein Bestandteil (insbesondere integral, einstückig) des Grundkörpers oder an diesem lösbar oder unlösbar fixiert. Start- und/oder Endknoten müssen aber nicht zwingend am Grundkörper angebracht sein. Es ist insbesondere auch denkbar, dass Start- und/oder Endknoten auf einem zusätzlichen Bauteil (z.B. PCB, Printed Circuit Board) angebracht sind, welchen wiederum mit dem Grundkörper verbindbar ist.

In einer bevorzugten Ausführungsform wird als elektrischer Leiter ein Draht oder eine Leitung verwendet. Derartige Elemente eignen sich besonders gut für das Verfahren.

In einer bevorzugten Ausführungsform werden mindestens zwei Niedervoltpfade hergestellt, indem ein gemeinsamer Leiter unterbrechungsfrei auf dem Grundkörper verlegt wird und anschließend in die beiden Niedervoltpfade aufgetrennt wird. Insbesondere wird der Leiter vor dem Auftrennen beidseits der Trennstelle relativ zum Grundkörper fixiert, z.B. an den oben genannten Führungselementen in Form von Fixierungselementen. Die Auftrennung kann durch einen entsprechenden Trennkopf insbesondere automatisiert erfolgen. Gegebenenfalls werden nicht benötigte, abgetrennte Reste von Leitungen entfernt. Auch die Auftrennung erfolgt insbesondere maschinell, insbesondere an bzw. mit Hilfe der gleichen Bewegungsvorrichtung (Tausch des Führungskopfes) oder an einer zusätzlichen Bewegungsvorrichtung. So ergibt sich eine ggf. günstigere Alternative zur jeweiligen separaten Erstellung zweier Niedervoltpfade.

In einer bevorzugten Ausführungsform enthält der Führungskopf eine - insbesondere handelsübliche - Drahtführungs-Düse bzw. wird eine solche als Führungskopf verwendet. Diese ist insbesondere rohrähnlich und/oder wird im Sprachgebrauch auch als "Drahtführer", "Wickeldüse" usw. bezeichnet.

In einer bevorzugten Ausführungsform wird ein maschinell bewegter Kontaktierkopf zu einem verlegten Leiter bewegt und der Kontaktierkopf kontaktiert den Leiter mit einem Gegenstück. Auch dies erfolgt insbesondere maschinell, insbesondere (siehe oben zum Trennkopf) an der gleichen (Tausch des Führungs-/Trennkopfes) oder einer zusätzlichen Bewegungsvorrichtung. Somit ist insbesondere die voll automatisierte Herstellung einschließlich Kontaktierung eines Zellkontaktiersystems hinsichtlich Niedervoltpfaden möglich.

Die Erfindung beruht auf folgenden Erkenntnissen, Beobachtungen bzw. Überlegungen und weist noch die nachfolgenden Ausführungsformen auf. Die Ausführungsformen werden dabei teils vereinfachend auch "die Erfindung" genannt. Die Ausführungsformen können hierbei auch Teile oder Kombinationen der oben genannten Ausführungsformen enthalten oder diesen entsprechen und/oder gegebenenfalls auch bisher nicht erwähnte Ausführungsformen einschließen.

Durch die Gestaltung und Adaption einer Drahtverlegung auf eine flache Ausführung innerhalb von Kontaktierelementen (Startknoten, Endknoten, Führungselement) werden die Signalleitungen (Leiter) automatisiert Point-to-Point (jeweils getrennte Niedervoltpfade) oder durchgehend (ein Leiter durchgehend, danach Auftrennung in verschiedene Niedervoltpfade) verlegt. Dies geschieht idealerweise durch eine rohrähnliche Drahtführerdüse und ein x, y, z, phi- Achssystem.

Gemäß der Erfindung erfolgt eine Verlegung von Leitern in allen Freiheitsgraden ohne formgebende Werkzeuge, universelle Strukturelemente in Form von mechanischen Elementen (Startknoten, Endknoten, Führungselement: stationär oder temporär fixierte Stifte, Barrieren, Kanäle, Labyrinthe...) erlauben eine ausschließlich programmtechnische Verlegung, es ergibt sich die Möglichkeit der Kombination von Verlege-und Kontaktierverfahren in einer Einheit, es ergibt sich die nur durch den Leiter selbst beschränkte geometrischen Leitungsverlegung innerhalb der vorgegebenen Bauräume, es ergibt sich die Kombinationsmöglichkeit innerhalb des Verlegeverfahrens in sechs Achsen, es sind keine mechanischen Abisoliervorgänge im Prozess notwendig, jedoch auch möglich.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen, jeweils in einer schematischen Prinzipskizze:

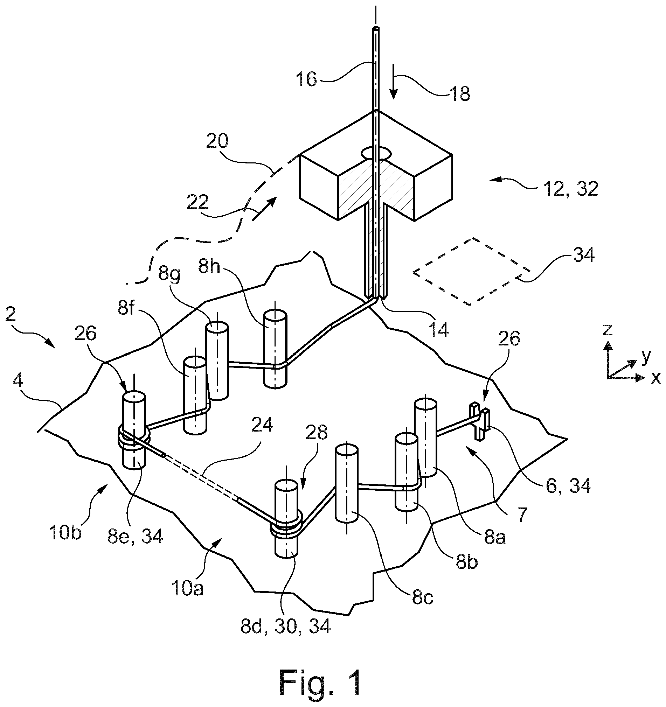

- Figur 1: das Verlegen eines Leiters auf einem Grundkörper eines Zellkontaktiersystems.

Figur 1 zeigt die Fertigung eines Zellkontaktiersystems 2, von dem in der Figur lediglich symbolisch ein Ausschnitt dargestellt ist, das einen Grundkörper 4 aufweist. Auf dem Grundkörper 4 sind ein Startknoten 6 stationär sowie acht Führungselemente 8a-h, hier Stifte bzw. Verlegestifte, temporär bzw. fest angeordnet.

Auf dem Grundkörper 4 sollen zwei Niedervoltpfade 10a,b des Zellkontaktiersystems 2 erzeugt werden. Hierzu wird ein Führungskopf 12 in Form eines Verlegekopfes mit Drahtführungsdüse bereitgestellt. Dieser ist in allen drei Raumrichtungen x, y und z bewegbar. Der Führungskopf 12 bzw. die Drahtführungsdüse weist eine Ausgabeöffnung 14 zur Ausgabe eines elektrischen Leiters 16 in Richtung des Pfeils 18 auf.

Zur Erstellung der Niedervoltpfade 10a,b wird der Führungskopf 12 entlang einer hier nur angedeuteten programmtechnisch vorgegebenen Bahn 20 durch einen nicht dargestellten Roboterarm in Richtung des Pfeils 22 maschinell geführt. Hierdurch bewegt sich dieser relativ zum Grundkörper 4. Dabei wird der Leiter 16 in Richtung des Pfeils 18 aus dem Führungskopf 12 ausgegeben und auf dem Grundkörper 4 verlegt, um die Niedervoltpfade 10a,b zu bilden.

Im Beispiel wird der gesamte Leiter 16 einschließlich eines gestrichelt dargestellten Zwischenstückes 24 verlegt.

Insgesamt wird also der Leiter 16, hier ein Draht, durch eine Hilfsvorrichtung, den Führungskopf 12 bzw. Verlegekopf oder - wie hier - durch eine zur Anbindung geeignete Geometrie, hier den Startknoten 6 in Form einer Schweißgabel, am Anfangspunkt 26 des erstes Niedervoltpfades 10a fixiert. Anschließend wird der Leiter 16 durch das hierfür geeignete Werkzeug, hier den Führungskopf 12 bzw. die Drahtführungs-Düse, geführt. Die Bahn 20 kann dabei in allen Freiheitsgraden frei bestimmt werden. Die Bewegung des Führungskopfes 12 und die Ausgabe des Leiters 16 aus dem Führungskopf 12 bzw. der Ausgabeöffnung 14 wird automatisch anhand eines programmierbaren Steuerprogramms durchgeführt. Während des Verlegens wird der Drahtzug durch eine nicht dargestellte, entgegen der Richtung des Pfeils 18 dem Führungskopf 12 vorgeschaltete Drahtzugbremse auf einen annähernd konstanten Wert gehalten. Der Zug wird dabei in Bezug auf den bereits am Startknoten 6 fixierten Leiterabschnitt 7 gehalten. Der Startknoten 6 ist hier also eine Anwickelgabel.

Die Führungselemente 8a-c dienen der Führung bzw. Fixierung des Niedervoltpfades 10a entlang eines gewünschten Verlaufes. Am Ende 28 des Niedervoltpfades 10a wird der Leiter 16 wiederum durch eine geeignete Anbindung, hier eine fixierende Umwickelung um das Führungselement 8d, fixiert. Letzteres bildet somit einen Endknoten 30 für den Niedervoltpfad 10a. Bei einem "point-to-point"-Vorgang würde der Leiter 16 an dieser Stelle gekappt und der erste Niedervoltpfad 10a wäre geschaffen. Das Führungselement 8d (wie das Führungselement 8e, siehe unten) kann in einer alternativen Ausführungsform daher auch ein Führungs- und/oder Kontaktierelement sein.

Im vorliegenden Beispiel findet jedoch eine Endlosverlegung statt, der Leiter 16 wird somit unterbrechungsfrei zum Führungselement 8e weitergeführt, ohne den Drahtzug zu verlieren, und dort - wiederum durch fixierende Umwickelung am Führungselement 8e - fixiert. Letzteres bildet den Anfangspunkt 26 des zweiten Niedervoltpfades 10b. Nun wird der Niedervoltpfad 10b entlang der Führungselemente 8f-h usw.; in Figur 1 ist die Erstellung des Niedervoltpfades 10b noch nicht abgeschlossen, weitere Führungselemente sowie ein weiterer Endknoten sind nicht dargestellt.

Um bei der im Beispiel gezeigten Endlosverlegung die elektrische Verschaltung zu gewährleisten, d.h. die beiden Niedervoltpfade 10a,b endgültig zu schaffen, wird der Endlosdraht in Form des Leiters 16 an den entsprechenden Stellen, d.h. zwischen den beiden Niedervoltpfaden 10a,b, aufgetrennt und die Drahtreste, d.h. das nicht mehr benötigte, gestrichelt dargestellte Zwischenstück 24 des Leiters 16 anschließend entfernt.

Am Startknoten 6 und an den Führungselementen 8d,e findet außerdem eine elektrische Kontaktierung des Leiters 16 mit dem betreffenden Bauteil als Gegenstück 34 statt. Der Führungskopf 12 bildet somit gleichzeitig einen Kontaktierkopf 32.

In Figur 1 nicht dargestellt, wird am Ende des Niedervoltpfades 10b der Leiter 16 durch einen alternativen Kontaktierkopf 32, nämlich einen Schweißkopf, mit einem Gegenstück 34, nämlich einer Kontaktplatte, verschweißt und dadurch elektrisch kontaktiert.

### Bezugszeichenliste

- 2: Zellkontaktiersystem
- 4: Grundkörper
- 6: Startknoten
- 7: Leiterabschnitt
- 8a-h: Führungselement
- 10a,b: Niedervoltpfad
- 12: Führungskopf
- 14: Ausgabeöffnung
- 16: Leiter
- 18: Pfeil
- 20: Bahn
- 22: Pfeil
- 24: Zwischenstück
- 26: Anfangspunkt
- 28: Ende
- 30: Endknoten
- 32: Kontaktierkopf
- 34: Gegenstück

- x,y,z: Raumrichtung

## Patentansprüche

1. Verfahren zum Herstellen mindestens eines Niedervoltpfades (10a,b) eines Zellkontaktiersystems (2), wobei das Zellkontaktiersystem (2) einen Grundkörper (4) enthält, bei dem:
- ein Führungskopf (12) mit einer Ausgabeöffnung (14) zur Ausgabe eines elektrischen Leiters (16) bereitgestellt wird,
- der Führungskopf (12) maschinell in einer vorgebbaren Bahn (20) relativ zum Grundkörper (4) geführt wird, und dabei der Leiter (16) aus dem Führungskopf (12) ausgegeben und auf dem Grundkörper (4) verlegt wird, um den Niedervoltpfad (10a,b) zu bilden.

2. Verfahren nach Anspruch 1,
**dadurch gekennzeichnet, dass**
die Bewegung des Führungskopfes (12) und/oder die Ausgabe des Leiters (16) aus dem Führungskopf (12) automatisch anhand eines programmierbaren Steuerprogramms durchgeführt wird.

3. Verfahren nach einem der vorhergehenden Ansprüche,
**dadurch gekennzeichnet, dass**
der Leiter (16) während der Ausgabe aus dem Führungskopf (12) in Bezug auf einen bereits fixierten Leiterabschnitt (7) auf Zug gehalten wird.

4. Verfahren nach einem der vorhergehenden Ansprüche,
**dadurch gekennzeichnet, dass**
der Leiter (16) vor dem Verlegen auf dem Grundkörper (4) an einem Startknoten (6) relativ zum Grundkörper (4) fixiert wird und/oder nach dem Verlegen auf dem Grundkörper (4) an einem Endknoten (30) relativ zum Grundkörper (4) fixiert wird.

5. Verfahren nach einem der vorhergehenden Ansprüche,
**dadurch gekennzeichnet, dass**
der Leiter (16) während des Verlegens auf dem Grundkörper (4) an mindestens einem Führungselement (8a-h) angeordnet wird.

6. Verfahren nach einem der Ansprüche 4 bis 5,
**dadurch gekennzeichnet, dass**
als Startknoten (6) und/oder Endknoten (30) und/oder Führungselement (8a-h) ein Klemmmittel und/oder ein Haltemittel und/oder ein Stift und/oder eine Barriere und/oder ein Kanal und/oder ein Labyrinth verwendet wird.

7. Verfahren nach einem der Ansprüche 4 bis 6,
**dadurch gekennzeichnet, dass**
als Startknoten (6) und/oder Endknoten (30) und/oder Führungselement (8a-h) solche verwendet werden, die am Grundkörper (4) angebracht sind.

8. Verfahren nach einem der vorhergehenden Ansprüche,
**dadurch gekennzeichnet, dass**
als elektrischer Leiter (16) ein Draht oder eine Leitung verwendet wird.

9. Verfahren nach einem der vorhergehenden Ansprüche,
**dadurch gekennzeichnet, dass**
mindestens zwei Niedervoltpfade (10a,b) hergestellt werden, indem ein gemeinsamer Leiter (16) unterbrechungsfrei auf dem Grundkörper (4) verlegt wird und anschließend in die beiden Niedervoltpfade (10a,b) aufgetrennt wird.

10. Verfahren nach einem der vorhergehenden Ansprüche,
**dadurch gekennzeichnet, dass**
der Führungskopf (12) eine Drahtführungs-Düse enthält.

11. Verfahren nach einem der vorhergehenden Ansprüche,
**dadurch gekennzeichnet, dass**
ein maschinell bewegter Kontaktierkopf (32) zu einem verlegten Leiter (16) bewegt wird und der Kontaktierkopf (32) den Leiter (16) mit einem Gegenstück (34) elektrisch kontaktiert.

## Claims

1. Method for creating at least one low-voltage path (10a,b) of a cell contacting system (2), wherein the cell contacting system (2) contains a main body (4), in which:
- a guide head (12) having a discharge opening (14) for discharging an electrical conductor (16) is provided,
- the guide head (12) is guided by machine in a predefinable path (20) relative to the main body (4), and the conductor (16) is discharged from the guide head (12) and laid on the main body (4) to form the low-voltage path (10a,b).

2. Method according to Claim 1,
**characterized in that**
the movement of the guide head (12) and/or the discharging of the conductor (16) from the guide head (12) is/are carried out automatically by means of a programmable control program.

3. Method according to either of the preceding claims, **characterized in that**
the conductor (16), while being discharged from the guide head (12), is tensioned in relation to a conductor section (7) that is already fixed.

4. Method according to one of the preceding claims, **characterized in that**
the conductor (16) is fixed to a start node (6) relative to the main body (4) before being laid on the main body (4) and/or is fixed to an end node (30) relative to the main body (4) after being laid on the main body (4).

5. Method according to one of the preceding claims, **characterized in that**
the conductor (16) is arranged on at least one guide element (8a-h) while being laid on the main body (4).

6. Method according to either of Claims 4 and 5, **characterized in that**
a clamping means and/or a holding means and/or a pin and/or a barrier and/or a channel and/or a labyrinth is/are used as the start node (6) and/or end node (30) and/or guide element (8a-h).

7. Method according to one of Claims 4 to 6, **characterized in that**
the start node (6) and/or end node (30) and/or guide element (8a-h) used are those that are attached to the main body (4).

8. Method according to one of the preceding claims, **characterized in that**
a wire or a line is used as electrical conductor (16).

9. Method according to one of the preceding claims, **characterized in that**
at least two low-voltage paths (10a,b) are created by a common conductor (16) being laid on the main body (4) without interruption and then being separated into the two low-voltage paths (10a,b).

10. Method according to one of the preceding claims, **characterized in that**
the guide head (12) contains a wire guide nozzle.

11. Method according to one of the preceding claims, **characterized in that**
a contacting head (32) that is moved by machine is moved to a laid conductor (16) and the contacting head (32) makes electrical contact between the conductor (16) and a counterpart (34).

## Revendications

1. Procédé de fabrication d'au moins un chemin à basse tension (10a, b) d'un système de contact de cellule (2), le système de contact de cellule (2) contenant un corps de base (4), dans lequel :
- une tête de guidage (12) avec une ouverture de sortie (14) est fournie pour la sortie d'un conducteur électrique (16),
- la tête de guidage (12) est guidée mécaniquement selon une trajectoire prédéterminable (20) par rapport au corps de base (4), et le conducteur (16) est ainsi sorti de la tête de guidage (12) et posé sur le corps de base (4) pour former le trajet à basse tension (10a, b).

2. Procédé selon la revendication 1,
**caractérisé en ce que**
le déplacement de la tête de guidage (12) et/ou la sortie du conducteur (16) de la tête de guidage (12) sont effectués automatiquement à l'aide d'un programme de commande programmable.

3. Procédé selon l'une quelconque des revendications précédentes,
**caractérisé en ce que**
le conducteur (16) est maintenu en traction par rapport à une section de conducteur (7) déjà fixée pendant la sortie de la tête de guidage (12).

4. Procédé selon l'une quelconque des revendications précédentes,
**caractérisé en ce que**
le conducteur (16), avant la pose sur le corps de base (4), est fixé à un nœud de départ (6) par rapport au corps de base (4) et/ou, après la pose sur le corps de base (4), est fixé à un nœud d'arrivée (30) par rapport au corps de base (4).

5. Procédé selon l'une quelconque des revendications précédentes,
**caractérisé en ce que**
le conducteur (16) est agencé sur au moins un élément de guidage (8a-h) pendant la pose sur le corps de base (4).

6. Procédé selon l'une quelconque des revendications 4 à 5,
**caractérisé en ce que**
un moyen de serrage et/ou un moyen de retenue et/ou une broche et/ou une barrière et/ou un canal et/ou un labyrinthe est utilisé en tant que nœud de départ (6) et/ou nœud d'arrivée (30) et/ou élément de guidage (8ah) .

7. Procédé selon l'une quelconque des revendications 4 à 6,
**caractérisé en ce que**
des nœuds de départ (6) et/ou des nœuds d'arrivée (30) et/ou un élément de guidage (8a-h) qui sont montés sur le corps de base (4) sont utilisés en tant que nœuds de départ (6) et/ou nœuds d'arrivée (30) et/ou élément de guidage (8a-h).

8. Procédé selon l'une quelconque des revendications précédentes,
**caractérisé en ce que**
un fil ou une ligne est utilisé(e) en tant que conducteur électrique (16).

9. Procédé selon l'une quelconque des revendications précédentes,
**caractérisé en ce que**
au moins deux trajets à basse tension (10a, b) sont fabriqués par le fait qu'un conducteur commun (16) est posé sans interruption sur le support de base (4) et ensuite séparé en les deux trajets à basse tension (10a, b) .

10. Procédé selon l'une quelconque des revendications précédentes,
**caractérisé en ce que**
la tête de guidage (12) contient une buse de guidage de fil.

11. Procédé selon l'une quelconque des revendications précédentes,
**caractérisé en ce que**
une tête de contact (32) déplacée mécaniquement est déplacée vers un conducteur (16) posé et la tête de contact (32) vient en contact électrique avec le conducteur (16) avec un contre-élément (34).
